# FASCICULE DE BREVET EUROPEEN

(11) **EP 0 721 856 B1**
(45) Date de publication et mention de la délivrance du brevet: **08.09.1999**
(21) Numéro de dépôt: 96400054.1
(22) Date de dépôt: 10.01.1996
(51) Int. Cl.: B60J 10/00, B60R 13/06

(54) **Profile d'étanchéité et son procédé de fabrication**
Dichtungsprofil und Verfahren zu dessen Herstellung
Sealing profile and method for making the same

(30) Priorité: 12.01.1995 FR 9500308
(43) Date de publication de la demande: 17.07.1996
(73) Titulaire: HUTCHINSON, 75008 Paris (FR)
(72) Inventeur: Nicolas, Olivier, F-92240 Malakoff (FR)
(74) Mandataire: Ramey, Daniel

(56) Documents cités:
- EP-A- 0 443 462
- DE-U- 9 401 563
- GB-A- 2 258 185
- US-A- 3 216 068

## Description

L'invention concerne un profilé d'étanchéité, tel par exemple qu'un lécheur de vitre pour véhicule automobile, et son procédé de fabrication.

Traditionnellement, les profilés de ce type comprennent une armature métallique noyée dans un matériau élastomère et adhérant à ce dernier par l'intermédiaire d'une couche mince d'un agent d'adhérisation, l'armature métallique permettant d'assurer une bonne stabilité dimensionnelle du profilé dans le sens longitudinal lors des variations de température et d'assurer également la fixation du profilé sur un support par pinçage ou serrage élastique, l'élastomère permettant essentiellement d'assurer la fonction étanchéité et de donner de bonnes qualités d'aspect au profilé.

Toutefois, ces profilés connus présentent plusieurs inconvénients : ils sont relativement lourds du fait de l'armature métallique, ils nécessitent une vulcanisation de l'élastomère en continu, et donc des installations de production qui sont encombrantes et coûteuses, et ils ne sont pas recyclables.

Il a déjà été proposé de remplacer l'armature métallique par une armature en thermoplastique et de revêtir cette armature d'élastomère par coextrusion. Cela pose cependant un certain nombre de problèmes, notamment au niveau de l'adhérence entre le thermoplastique et l'élastomère, et il serait de plus à peu près impossible de faire passer l'ensemble armature-élastomère dans les moyens de conformation ou de calibrage qui sont en général prévus en aval des moyens d'extrusion ou de co-extrusion des profilés.

Dans la technique antérieure à la présente invention, des profilés d'étanchéité à armature en matière thermoplastique chargée de fibres ne pouvaient être réalisés par extrusion.

Le Modèle d'Utilité Allemand DE-U-94 01 563.5 décrit la fabrication d'un tel profilé par moulage par injection.

Ce Modèle d'utilité Allemand décrit bien un profilé d'étanchéité formé de trois matières différentes, comprenant un thermoplastique renforcé par des fibres, une matière du type thermoplastique ne comprenant pas de fibres, et une matière du type élastomère, ne comprenant pas non plus de fibres. Il indique aussi que ce profilé d'étanchéité est fabriqué par moulage par injection, et de préférence par moulage en une seule opération, grâce à une injection simultanée des trois matières précitées, qui sont compatibles entre elles.

Le moulage par injection des trois matières précitées, successivement ou simultanément, interdit une superposition totale de ces matières, c'est-à-dire que la deuxième couche de matière plastique non chargée de fibres ne peut pas être interposée entre la première couche de matière plastique chargée de fibres et la troisième couche d'élastomère. Cela signifie également que la troisième couche d'élastomère doit être injectée sur la première couche de matière plastique chargée de fibres et non pas sur la deuxième couche de matière plastique non chargée de fibres.

Les moyens décrits dans ce document antérieur ne permettent pas de fabriquer un profilé d'étanchéité comprenant une armature en thermoplastique renforcée par des fibres, recouverte entièrement d'une couche de matière plastique non chargée de fibres, avec un revêtement en élastomère adhérant à la couche de matière non chargée.

L'invention a pour but d'apporter une solution simple, fiable et peu coûteuse à ces problèmes, et à cet effet, elle a pour objet un profilé du type précité, comprenant une âme ou armature en thermoplastique, fabriqué par extrusion et non par moulage par injection, et son procédé de fabrication.

Elle a également pour objet un profilé du type précité, réalisé entièrement en thermoplastique.

Elle propose, à cet effet, un profilé d'étanchéité tel qu'un lécheur de vitre pour véhicule automobile, réalisé par extrusion et comprenant une armature en thermoplastique et un revêtement d'élastomère, caractérisé en ce que ladite armature est en thermoplastique chargé de fibres et est revêtue entièrement d'au moins une couche mince de thermoplastique non chargé de fibres, à laquelle adhère le revêtement d'élastomère.

Le thermoplastique chargé de fibres confère à l'armature une rigidité comparable à celle des métaux, ce qui permet de monter le profilé sur un support par pinçage ou serrage élastique. En outre, l'armature a une excellente stabilité dimensionnelle, avec un post-retrait quasi-nul.

Dans le profilé selon l'invention, la couche mince de thermoplastique non chargé de fibres, qui recouvre l'armature, permet d'assurer l'adhérence du revêtement d'élastomère et la protection des moyens de conformation et de calibrage dans lesquels on fait passer l'armature en sortie d<extrusion.

Dans un mode de réalisation préféré de l'invention, le thermoplastique de l'armature est choisi dans le groupe comprenant les polypropylènes, les polyamides, en particulier les PA 6, PA 66, PA 6/10, PA 11, PA 12 et PA 4/6, les polyesters PET et PBT, les PEN (polyéthylène-naphtalate) et PBN (polybutylène-naphtalate), les ABS, les alliages PA-PP, les PVC, les alliages ABS-PVC et les mélanges PVC et PVC surchloré (CPVC), tandis que l'élastomère est de préférence un élastomère thermoplastique et est choisi dans le groupe comprenant les élastomères thermoplastiques oléfiniques (TPO et TPV), les polyéthers blocs amides (PEBA), les élastomères thermoplastiques à base de polyester, les élastomère thermoplastiques à base de PVC, les élastomères thermoplastiques à base SBS (styrène-butadiène-styrène) ou à base SEBS (styrène-éthylène-butadiène-styrène) ou à base PU (polyuréthane), et les élastomères thermoplastiques ionomères.

L'invention propose également un procédé de fabrication d'un profilé d'étanchéité tel par exemple qu'un lécheur de vitre pour véhicule automobile, ce procédé consistant à réaliser par extrusion une armature en thermoplastique chargé de fibres et un revêtement en élastomère recouvrant au moins une partie de l'armature, et étant caractérisé en ce qu'il consiste à co-extruder l'armature en thermoplastique chargé de fibres et au moins une couche mince de thermoplastique non chargé de fibres qui recouvre entièrement ladite armature, puis à conformer ou calibrer l'armature ainsi recouverte, et ensuite à extruder sur au moins une partie de cette armature un élastomère compatible avec le thermoplastique de la couche mince.

De préférence, l'élastomère est un élastomère thermoplastique.

Ce procédé permet de fabriquer le profilé par extrusion sans nuire à la durée de vie des outillages utilisés tout en assurant une bonne adhérence entre l'armature et l'élastomère.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 est une vue schématique en coupe transversale d'un profilé d'étanchéité selon l'invention;
la figure 2 est une vue agrandie du détail encerclé II de la figure 1 ;
la figure 3 est une vue schématique en coupe transversale d'une variante de réalisation du profilé ;
les figures 4 et 5 sont des vues agrandies des détails encerclés IV et V respectivement de la figure 3;
la figure 6 est une vue schématique en coupe transversale d'une autre forme de réalisation du profilé selon l'invention.

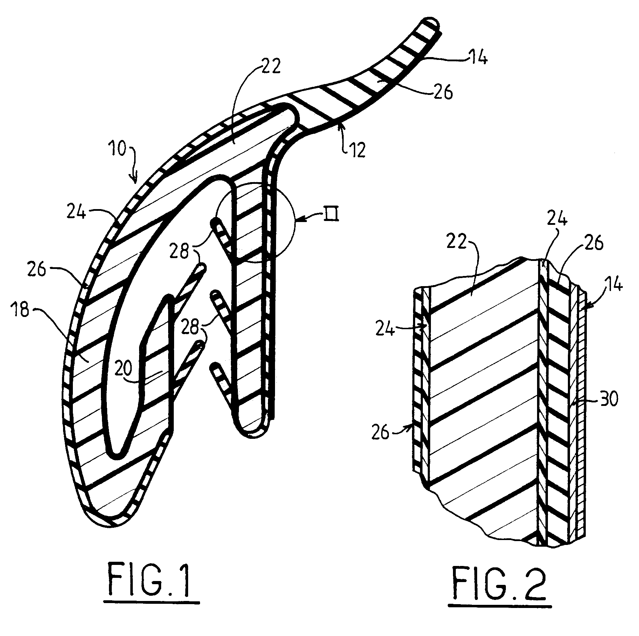

On a représenté en figure 1 un profilé d'étanchéité destiné à former un lécheur de vitre pour véhicule automobile, qui comprend une partie 10 de montage sur un support, tel qu'un bord d'une tôle, et une lèvre d'étanchéité 12 dont la face destinée à s'appliquer sur une vitre mobile est revêtue d'un floc 14 ou analogue facilitant le déplacement de la vitre sur la lèvre d'étanchéité.

La partie 10 de montage est sensiblement à section en U et comprend une première branche 16 s'étendant d'un côté du support et une seconde branche 18 incurvée s'étendant de l'autre côté de ce support, l'extrémité 20 de cette seconde branche étant repliée à 180° vers l'intérieur, en regard de la première branche 16.

Selon l'invention, le profilé comprend une armature 22 en thermoplastique chargé de fibres, telles que des fibres de verre par exemple, qui constitue la partie précitée 10 du profilé et qui est revêtue sur toute sa surface d'une couche mince 24 de thermoplastique non chargé de fibres, cette couche mince 24 ayant pour but d'éviter l'usure intense des conformateurs ou calibreurs et autres outillages dans lesquels est tirée l'armature 22, et qui résulterait du frottement des fibres de verre sur la matière de ces conformateurs et outillages.

La couche mince 24 forme également une couche de compatibilité chimique et thermique avec l'élastomère 26 qui constitue la lèvre d'étanchéité 12 et qui recouvre également, en couche mince, une bonne partie des branches 16 et 18 de la partie 10 de montage du profilé.

Ce revêtement de l'armature par l'élastomère permet également de former sur les faces en regard des branches 16 et 20 des lèvres ou nervures 28 orientées en oblique vers l'intérieur du U, pour s'opposer à l'arrachement du profilé lorsqu'il a été monté sur son support.

De façon classique, la face de la lèvre 12 en élastomère qui doit recevoir le floc 14, est revêtue d'une couche mince 30 de matière adhésive, sur laquelle est déposé le floc 14.

Le profilé selon l'invention qui est représenté en figure 1 ne peut être fabriqué directement par co-extrusion de thermoplastique et d'élastomère, la présence de parties minces en élastomère telles que les lèvres ou nervures 28 interdisant le passage du profilé dans un conformateur ou calibreur en sortie d'extrusion.

Ce profilé ne peut pas non plus être fabriqué par extrusion de l'armature 22, passage de l'armature 22 dans un conformateur et refroidissement, puis par extrusion de l'élastomère sur l'armature, car la présence des fibres de verre en surface de l'armature 22 provoquerait une usure intense du conformateur et sa mise hors service au bout d'un temps très court, même si ce conformateur était réalisé en un matériau extrêmement dur.

En outre, le défaut d'adhérence naturelle entre les thermoplastiques et les élastomères nécessiterait l'interposition d'une couche mince de matière d'adhérisation appropriée entre le thermoplastique et l'élastomère.

L'invention permet de résoudre ces problèmes par co-extrusion de l'armature 22 en thermoplastique chargé de fibres, par exemple de fibres de verre, et de la couche mince 24 de thermoplastique non chargé de fibres, puis par passage de l'armature ainsi revêtue de la couche mince dans un conformateur, par refroidissement de l'ensemble, et par extrusion de l'élastomère 26 sur la couche mince 24.

Avantageusement, l'élastomère utilisé est un élastomère thermoplastique tel qu'un TPO ou un TPV (des élastomères thermoplastiques dérivés des polyoléfines, qui peuvent être vulcanisables ou non vulcanisables et qui sont en général des mélanges d'homopolymère ou de copolymère de polypropylène avec un élastomère de type EPDM, ou NR, ou SBR, ou IIR, etc, un TPO étant par exemple un mélange de polypropylène et de EPDM préalablement vulcanisé, un TPV étant par exemple un mélange de polypropylène et de EPDM vulcanisé au cours du mélange), l'élastomère thermoplastique 26 pouvant également être un polyéther bloc amide (PEBA) qui est constitué d'enchaînements linéaires et réguliers de segments polyamides rigides et de segments polyéthers souples, ou encore un élastomère thermoplastique à base de polyester ou à base de PVC.

On peut également utiliser un élastomère thermoplastique ionomère, qui est constitué de chaines polymériques hydrocarbonées présentant des groupes latéraux polaires (le taux maximum de ces groupes latéraux polaires étant de 10 % environ), tel que le SURLYN commercialisé par Du Pont De Nemours, les groupes latéraux polaires augmentant l'affinité avec d'autres matières.

Le thermoplastique utilisé pour l'armature 22 peut être un homopolymère ou un copolymère de polypropylène, un polyamide, avantageusement du type 6, 66, 6/10, 11, 12, 4/6, un polyester (PET ou PBT) un ABS, un alliage polyamide-propylène ou un PVC, et contient une quantité de fibres de verre comprise entre 5 et 50% environ en poids.

Le thermoplastique de la couche mince 24 (dont l'épaisseur est typiquement comprise entre 50 et 300 µm environ) est choisi pour offrir une compatibilité avec le thermoplastique de l'armature 22 et l'élastomère thermoplastique 26. On peut notamment utiliser du polypropylène quand l'armature 22 est en polypropylène chargé de fibres et que l'élastomère 26 est un TPO ou TPV. On peut utiliser, pour la couche mince 24, un polyamide quand l'armature 22 est en polyamide et que l'élastomère 26 est un PEBA, ou du PBT quand l'armature 22 est en polyester et que l'élastomère 26 est un TPE à base de polyester.

Si nécessaire, on peut également prévoir deux couches minces intermédiaires 24 pour assurer l'adhérence de l'armature et de l'élastomère 26. Par exemple, on peut utiliser deux couches minces différentes 24 de polyéthylène fonctionnalisé ou de copolymère à base d'éthylène quand l'armature est en polypropylène et que l'élastomère 26 est en TPE à base PVC.

De préférence, le thermoplastique d'un profilé selon l'invention est un polypropylène (par exemple du type commercialisé sous la dénomination Santoprène) ou un mélange polypropylène-polyamide et l'élastomère est un élastomère thermoplastique à base oléfine.

Dans un autre mode de réalisation préféré de l'invention, le thermoplastique est du PVC renforcé de fibres de verre, et l'élastomère est un élastomère thermoplastique à base PVC.

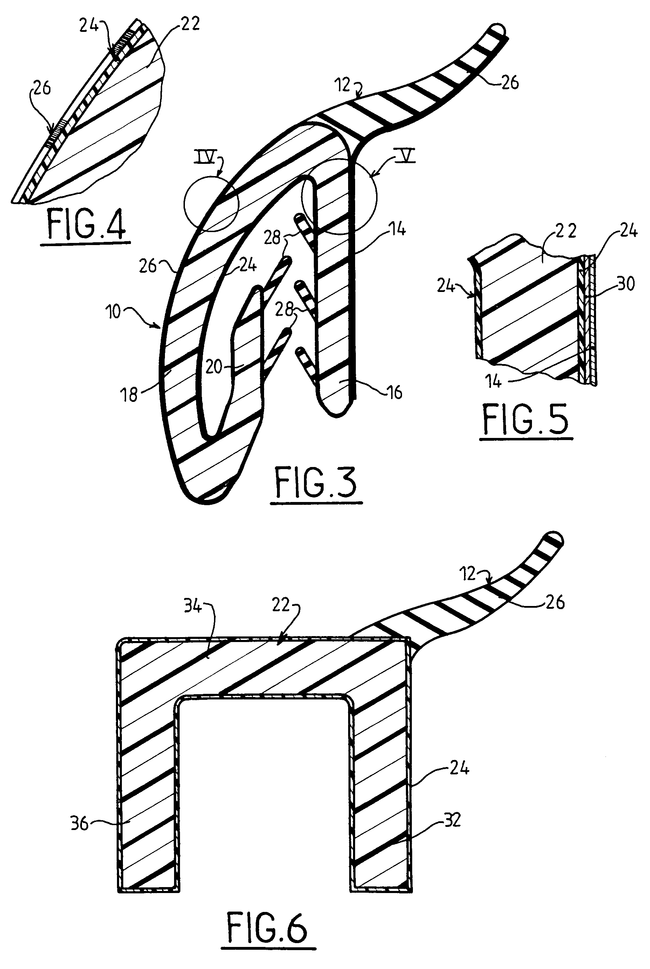

Le profilé représenté aux figures 3 à 5 diffère de celui des figures 1 et 2 en ce que la couche mince 24 de thermoplastique dépourvu de fibres, qui recouvre l'armature 22 de thermoplastique chargé de fibres, n'est revêtue que très partiellement de l'élastomère 26, seules les faces extérieures des branches 16 et 18 de la partie 10 comportant une couche mince d'élastomère 26, les faces intérieures en vis-à-vis de ces branches ne comportant que la couche mince de thermoplastique 24 non chargé de fibres, les nervures ou lèvres 28 en élastomère étant formées directement sur cette couche mince 24.

Comme dans le mode de réalisation précédent, la face de la lèvre d'étanchéité 12 qui doit venir en contact avec la vitre comporte une couche de floc 14 fixée par l'intermédiaire d'une couche adhésive 30.

Dans le mode de réalisation représenté en figure 6, le profilé selon l'invention est applicable dans un autre domaine industriel, tel que le bâtiment par exemple, et comprend alors une armature 22 à section en U comprenant trois branches 32, 34 et 36 perpendiculaires entre elles, cette armature 22 en thermoplastique chargé de fibres étant revêtue entièrement d'une couche mince 24 de thermoplastique non chargé de fibres et comprenant, le long de la jonction entre deux branches consécutives 32, 34, une lèvre souple 12 d'étanchéité réalisée en élastomère 26 qui adhère à la couche mince 24 précitée.

Comme les profilés des modes de réalisation précédents, le profilé de la figure 6 est réalisé par co-extrusion de l'armature 22 et de la couche mince 24, passage dans un conformateur et refroidissement, puis par extrusion de la lèvre souple 12 en élastomère.

De façon générale, l'invention présente les avantages suivants :
- les profilés sont réalisés par extrusion avec des armatures en thermoplastique qui sont légères, rigides et insensibles à la corrosion,
- les profilés peuvent être entièrement en thermoplastique, d'où une économie par absence de vulcanisation des élastomères,
- les profilés ont une excellente stabilité dimensionnelle (très faible coefficient de dilatation thermique, post-retrait très faible ou inexistant),
- la durée de vie des outillages est préservée,
- le prix de revient des profilés est abaissé.

## Revendications

1. Profilé d'étanchéité, tel par exemple qu'un lécheur de vitre pour véhicule automobile, réalisé par extrusion et comprenant une armature (22) en thermoplastique et un revêtement (26) en élastomère, caractérisé en ce que ladite armature (22) est en thermoplastique chargé de fibres et est entièrement revêtue d'au moins une couche mince (24) de thermoplastique non chargé de fibres, à laquelle adhère le revêtement d'élastomère (26).

2. Profité selon la revendication 1, caractérisé en ce que l'élastomère est un élastomère thermoplastique.

3. Profité selon la revendication 2, caractérisé en ce que l'élastomère est choisi dans le groupe comprenant les élastomères thermoplastiques dérivés des polyoléfines, les polyéthers blocs amides, les élastomères thermoplastiques à base polyester ou PVC ou SBS ou SEBS ou PU, et les élastomères thermoplastiques ionomères.

4. Profité selon l'une des revendications précédentes, caractérisé en ce que le thermoplastique de l'armature est choisi dans le groupe comprenant les polypropylènes, les polyamides, les polyesters, les ABS, les alliages polyamide-propylène, les PVC, les alliages ABS-PVC, les alliages PVC et PVC surchloré.

5. Profilé selon l'une des revendications précédentes, caractérisé en ce que le thermoplastique de la ou des couches minces (24) est choisi pour offrir une compatibilité chimique et thermique avec le thermoplastique de l'armature et l'élastomère (26).

6. Profité selon l'une des revendications précédentes, caractérisé en ce que les fibres de l'armature (22) sont des fibres de verre.

7. Procédé de fabrication d'un profilé d'étanchéité selon une des revendications précédentes, consistant à réaliser par extrusion une armature (22) en thermoplastique et un revêtement (26) en élastomère recouvrant au moins une partie de l'armature, caractérisé en ce qu'il consiste à co-extruder l'armature (22) en thermoplastique chargé de fibres et au moins une couche mince (24) de thermoplastique non chargé de fibres qui recouvre entièrement ladite armature, puis à conformer ou calibrer l'armature ainsi recouverte, et ensuite à extruder sur au moins une partie de cette armature un élastomère (26) compatible avec le thermoplastique de la couche mince (24).

8. Procédé selon la revendication 7, caractérisé en ce que l'élastomère est un élastomère thermoplastique.

9. Procédé selon la revendication 8, caractérisé en ce que l'élastomère est choisi dans le groupe comprenant les élastomères thermoplastiques dérivés des polyoléfines, les polyéthers blocs amides et les élastomères thermoplastiques à base polyester ou PVC ou SBS ou SEBS ou PU et les élastomères thermoplastiques inonomères.

10. Procédé selon l'une des revendications 7 à 9, caractérisé en ce que le thermoplastique de l'armature est choisi dans le groupe comprenant les polypropylènes, les polyamides, les polyesters, les ABS, les alliages polyamide-polypropylène, les PVC, les mélanges ABS-PVC et les mélanges PVC-PVC surchloré.

11. Procédé selon l'une des revendications 7 à 10, caractérisé en ce que les fibres de l'armature (22) sont des fibres de verre.

## Claims

1. A moulded sealing strip, for example a window seal for a motor vehicle, produced by extrusion and comprising a reinforcement (22) of thermoplastic material and a covering (26) of elastomer, characterised in that the said reinforcement (22) is of fibre-filled thermoplastic material and is entirely covered by at least one thin layer (24) of thermoplastic material which is not fibre-filled, to which the elastomeric covering (26) adheres.

2. A sealing member according to claim 1, characterised in that the elastomer is a thermoplastic elastomer.

3. A sealing member according to claim 2, characterised in that the elastomer is chosen from the group comprising the thermoplastic elastomers derived from polyolefins, the amide polyether groups, the polyester or PVC or SBS or SEBS or PU based thermoplastic elastomers and the inomeric thermoplastic elastomers.

4. A sealing member according to one of the preceding claims, characterised in that the thermoplastic material of the reinforcement is chosen from the group comprising the polypropylenes, the polyamides, the polyesters, the ABS (styrene acrylonitrile butadienes), the polyamide propylene alloys, the PVC's, the ABS-PVC alloys and the PVC and post-chlorinated PVC alloys.

5. A sealing member according to one of the preceding claims, characterised in that the thermoplastic material of the thin layer(s) (24) is chosen to offer a chemical and thermal compatibility with the thermoplastic material of the reinforcement and the elastomer (26).

6. A sealing member according to one of the preceding claims, characterised in that the fibres of the reinforcement (22) are glass fibres.

7. A method of manufacturing a sealing member according to one of the preceding claims, consisting of producing by extrusion a reinforcement (22) of thermoplastic material and a covering (26) of elastomer covering at least a part of the reinforcement, characterised in that it consists of co-extruding the reinforcement (22) of fibre-filled thermoplastic material and at least one thin layer (24) of a thermoplastic material which is not fibre-filled and which entirely covers the said reinforcement, when in shaping or calibrating the reinforcement which is thus covered, and then extruding over at least a part of this reinforcement an elastomer (26) which is compatible with the thermoplastic material of the thin layer (24).

8. A method according to claim 7, characterised in that the elastomer is a thermoplastic elastomer.

9. A method according to claim 8, characterised in that the elastomer is chosen from the group comprising the thermoplastic elastomers derived from the polyolefins, the amide polyether groups and the polyester or PVC or SBS or SEBS or PU based thermoplastic elastomers and the inomeric thermoplastic elastomers.

10. A method according to one of claims 7 to 9, characterised in that the thermoplastic material of the reinforcement is chosen from a group comprising the polypropylenes, the polyamides, the polyesters, the ABS's, the polyamide propylene alloys, the PVC's, the ABS-PVC mixtures and the post-chlorinated PVC-PVC mixtures.

11. A method according to one of claims 7 to 10, characterised in that the fibres of the reinforcement (22) are glass fibres.

## Patentansprüche

1. Dichtungsprofil, wie beispielsweise ein Scheibenwischer für Kraftfahrzeuge, das mittels Extrusion hergestellt ist und eine Verstärkung (22) aus Thermoplast sowie eine Beschichtung (26) aus Elastomer aufweist, dadurch gekennzeichnet, daß die Verstärkung (22) aus fasergefülltem Thermoplast besteht und von mindestens einem Film bzw. einer dünnen Schicht (24) von nicht fasergefülltem Thermoplast, an der die Beschichtung aus Elastomer (26) haftet, vollständig bedeckt ist.

2. Profil nach Anspruch 1, dadurch gekennzeichnet, daß das Elastomer ein thermoplastisches Elastomer ist.

3. Profil nach Anspruch 2, dadurch gekennzeichnet, daß das Elastomer aus der Gruppe ausgewählt ist, welche die von den Polyolefinen hergeleiteten thermoplastischen Elastomere, die Polyether-Block-Amide, die thermoplastischen Elastomere auf der Basis von Polyester oder PVC oder SBS oder SEBS oder PU, und die ionomeren thermoplastischen Elastomere beinhaltet.

4. Profil nach einem der vorhergehenden Ansprüche, dadurch gekennzeichnet, daß der Thermoplast für die Verstärkung aus der Gruppe ausgewählt ist, welche die Polypropylene, Polyamide, Polyester, ABS, Polyamid-Propylen-Legierungen, PVC, ABS-PVC-Legierungen, Legierungen von PVC und nachchloriertem PVC beinhaltet.

5. Profil nach einem der vorhergehenden Ansprüche, dadurch gekennzeichnet, daß der Thermoplast der dünnen Schicht/en (24) so gewählt ist, daß er eine chemische und thermische Kompatibilität mit dem Thermoplast der Verstärkung und dem Elastomer (26) zur Verfügung stellt.

6. Profil nach einem der vorhergehenden Ansprüche, dadurch gekennzeichnet, daß die Fasern der Verstärkung (22) Glasfasern sind.

7. Verfahren zur Herstellung eines Dichtungsprofils nach einem der vorhergehenden Ansprüche, bestehend aus der Herstellung durch Extrusion einer Verstärkung (22) aus Thermoplast und einer Beschichtung (26) aus Elastomer, welche mindestens einen Teil der Verstärkung bedeckt, dadurch gekennzeichnet, daß es darin besteht, die Verstärkung (22) aus fasergefülltem Thermoplast und mindestens einen Film bzw. eine dünne Schicht (24) aus nicht fasergefülltem Thermoplast, welche die Verstärkung vollständig bedeckt, zu koextrudieren, daraufhin die derart bedeckte Verstärkung kalt abzuformen oder zu kalibrieren, und anschließend auf mindestens einen Teil dieser Verstärkung ein mit dem Thermoplast der dünnen Schicht (24) kompatibles Elastomer (26) zu extrudieren.

8. Verfahren nach Anspruch 7, dadurch gekennzeichnet, daß das Elastomer ein thermoplastisches Elastomer ist.

9. Verfahren nach Anspruch 8, dadurch gekennzeichnet, daß das Elastomer aus der Gruppe ausgewählt ist, welche die von den Polyolefinen hergeleiteten thermoplastischen Elastomere, die Polyether-Block-Amide und die thermoplastischen Elastomere auf der Basis von Polyester oder PVC oder SBS oder SEBS oder PU und die ionomeren thermoplastischen Elastomere beinhaltet.

10. Verfahren nach einem der Ansprüche 7 bis 9, dadurch gekennzeichnet, daß der Thermoplast für die Verstärkung aus der Gruppe ausgewählt ist, welche die Polypropylene, Polyamide, Polyester, ABS, Polyamid-Polypropylen-Legierungen, PVC, ABS-PVC-Mischungen und Mischungen von PVC und nachchloriertem PVC beinhaltet.

11. Verfahren nach einem der Ansprüche 7 bis 10, dadurch gekennzeichnet, daß die Fasern der Verstärkung (22) Glasfasern sind.
